# EUROPÄISCHE PATENTSCHRIFT

(11) **EP 3 634 833 B1**
(45) Veröffentlichungstag und Bekanntmachung des Hinweises auf die Patenterteilung: **07.07.2021**
(21) Anmeldenummer: 18727230.7
(22) Anmeldetag: 18.05.2018
(51) Int. Cl.: B62D 1/28, B62D 5/04, B62D 15/02, B60W 50/029

(54) **VORRICHTUNG UND VERFAHREN ZUM PILOTIERTEN FAHREN EINES KRAFTFAHRZEUGS**
DEVICE AND METHOD FOR AUTOPILOTING A VEHICLE
DISPOSITIF ET PROCÉDÉ D'AUTOPILOTAGE DE VÉHICULE

(30) Priorität: 08.06.2017 DE 102017209720
(43) Veröffentlichungstag der Anmeldung: 15.04.2020
(73) Patentinhaber: Volkswagen Aktiengesellschaft, 38440 Wolfsburg (DE)
(72) Erfinder: SWIETER, Ingo, 38162 Cremlingen (DE)
(86) Internationale Anmeldenummer: PCT/EP2018/063104
(87) Internationale Veröffentlichungsnummer: WO 2018/224290

(56) Entgegenhaltungen:
- EP-A2- 0 856 453
- DE-T5-112013 006 263
- US-A1- 2016 332 660

## Beschreibung

Die Erfindung betrifft eine Vorrichtung und ein Verfahren zum pilotierten Fahren eines Kraftfahrzeugs.

Unter pilotiertem Fahren wird ein voll automatisiertes Fahren verstanden, bei dem der Fahrer nicht mehr als Rückfallebene zur Verfügung steht. Dabei wird die gesamte Quer- und Längsdynamik wie beispielsweise Lenkeingriffe und Beschleunigungen durch Aktoren umgesetzt, die von zugeordneten Reglern Steuersignale erhalten. Ein übergeordnetes Steuergerät ist dabei für die Trajektorien-Planung zuständig, wobei dann diese geplanten Trajektorien automatisiert abgefahren werden.

Neben den Sicherheitsaspekten spielen auch Komfortaspekte dabei eine Rolle, die im Ergebnis dazu führen, dass die Regler, die beispielsweise die Ansteuersignale für eine Lenk-Aktorik ermitteln, sehr komplex sind. Diese berücksichtigen bei der Umsetzung einer aktuellen Lenkanforderung weitere Eingangsgrößen wie z.B. die aktuelle und zukünftige Fahrgeschwindigkeit, den aktuellen Lenkwinkel und einen zukünftigen Lenkwinkel sowie vorangegangene Eingangsgrößen (wie z. B. Lenkwinkel und/oder Fahrgeschwindigkeit). Ein Problem solcher komplexer Regler ist, dass diese nur schwer oder gar nicht vollständig testbar sind.

Aus der EP 0 856 453 A2 ist eine gattungsgemäße Vorrichtung zum pilotierten Fahren eines Kraftfahrzeugs bekannt.

Aus der US 2016/332660 A1 ist ein Lenkungssystem bekannt, mit einem Lenkungssteuergerät, in dem eine Überwachungseinheit und Regelalgorithmen integriert sind. Dabei werden Rotorlage-Daten eines Rotorlagesensors als Ist-Aktorausgangsgröße ermittelt.

Aus der DE 121 2013 006 263 T5 ist ein Lenkungssystem bekannt, das eine Diagnoseeinheit zur Erfassung von Bauteilefehlern aufweist.

Der Erfindung liegt das technische Problem zugrunde, eine Vorrichtung zum pilotierten Fahren eines Kraftfahrzeugs zu schaffen, bei dem die Sicherheit erhöht wird. Ein weiteres Problem ist es, ein geeignetes Verfahren zur Verfügung zu stellen.

Die Lösung des technischen Problems ergibt sich durch eine Vorrichtung mit den Merkmalen des Anspruchs 1 sowie ein Verfahren mit den Merkmalen des Anspruchs 10. Weitere vorteilhafte Ausgestaltungen der Erfindung ergeben sich aus den Unteransprüchen.

Hierzu umfasst die Vorrichtung zum pilotierten Fahren eines Kraftfahrzeugs mindestens ein übergeordnetes Steuergerät, einen ersten Regler, einen zweiten Regler, mindestens einen Aktor, eine Einheit zur Erfassung mindestens einer Ist-Aktorausgangsgröße des Aktors sowie eine Überwachungseinheit. Das übergeordnete Steuergerät ist dabei derart ausgebildet, eine Soll-Aktorausgangsgröße zu ermitteln und an den ersten Regler sowie die Überwachungseinheit zu übermitteln. Der erste Regler ist derart ausgebildet, aufgrund der Soll-Aktorausgangsgröße sowie mindestens einer weiteren Eingangsgröße ein Steuersignal für den Aktor zu ermitteln. Die Überwachungseinheit und/oder das übergeordnete Steuergerät sind derart ausgebildet, dass bei einer vorgegebenen Abweichung der Ist-Aktorausgangsgröße von der Soll-Aktorausgangsgröße der erste Regler deaktiviert und der zweite Regler aktiviert wird, wobei der zweite Regler mindestens eine Eingangsgröße weniger als der erste Regler aufweist. Der Grundgedanke der Erfindung ist, dem komplexen ersten Regler, bei dem insbesondere Software-Fehler nicht gänzlich ausschließbar sind, durch einen zweiten einfachen Regler abzusichern, der voll durchgetestet werden kann. Durch die Verwendung der Aktorausgangsgröße reagiert die Vorrichtung dabei sehr schnell auf Fehler des Reglers.

In einer Ausführungsform ist das übergeordnete Steuergerät derart ausgebildet, neben der Soll-Aktorausgangsgröße eine Soll-Zeit und ein Toleranz-Band für die Soll-Aktorausgangsgröße an die Überwachungseinheit zu übermitteln, wobei Soll-Zeit und/oder Toleranz-Band je nach Fahraufgabe angepasst werden können.

In einer weiteren Ausführungsform erfolgt bei zeitkritischen Abweichungen die Deaktivierung des ersten Reglers und die Aktivierung des zweiten Reglers durch die Überwachungseinheit. Zeitkritische Abweichungen sind insbesondere Abweichungen bei kurzen Soll-Zeiten, wo also beispielsweise ein Lenkeingriff schnell umgesetzt werden soll. Bei Abweichungen, wo die Fahrsituation weniger zeitkritisch ist, kann die Deaktivierung auch durch das übergeordnete Steuergerät erfolgen.

In einer weiteren Ausführungsform weist die Vorrichtung einen weiteren Aktor auf, wobei der weitere Aktor vom ersten und/oder vom zweiten Regler angesteuert wird. In einer Ausführungsform werden also stets beide Aktoren verwendet. Alternativ kann vorgesehen sein, dass dem zweiten Regler sein eigener weiterer Aktor zugeordnet ist, sodass mit der Umschaltung der Regler auch die Aktoren umgeschaltet werden. Auch ist es möglich, dass der weitere Aktor nur vom ersten Regler angesteuert wird, sodass dieser mit der Deaktivierung des ersten Reglers auch deaktiviert wird.

In einer weiteren Ausführungsform ist der mindestens eine Aktor als Elektromotor zur Einstellung eines Lenkwinkels des Kraftfahrzeugs ausgebildet. Dabei ist der Elektromotor beispielsweise über ein Getriebe mit einer Zahnstange verbunden, die dann die lenkbaren Räder verstellt. Die Soll- bzw. Ist-Aktorausgangsgröße kann dann beispielsweise eine Zahnstangenposition sein.

In einer weiteren Ausführungsform ist dem Elektromotor ein Lenkungssteuergerät zugeordnet, wobei die Überwachungseinheit und/oder der erste Regler in dem Lenkungssteuergerät integriert sind.

Zusätzlich kann auch der zweite Regler in das Lenkungssteuergerät integriert sein. Dabei kann weiter vorgesehen sein, dass der erste und zweite Regler mindestens teilweise auf gemeinsame Hardware-Komponenten zurückgreifen.

In einer weiteren Ausführungsform ist die Einheit zur Erfassung der Ist-Aktorausgangsgröße als Rotorlagesensor ausgebildet. Aus den Daten des Rotorlagesensors lässt sich dann beispielsweise die Zahnstangenposition ermitteln.

In einer weiteren Ausführungsform ist dem ersten Regler eine Diagnoseeinheit zur Erfassung von Bauteilefehlern zugeordnet, um Hardware-Defekte zu erkennen.

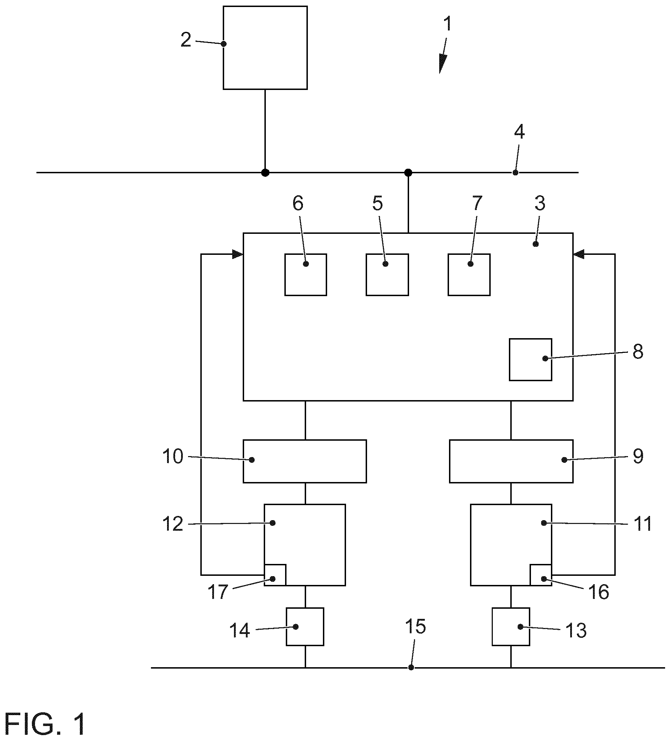

Die Erfindung wird nachfolgend anhand eines bevorzugten Ausführungsbeispiels näher erläutert. Die einzige Figur zeigt ein schematisches Blockschaltbild einer Vorrichtung zum pilotierten Fahren.

Die Vorrichtung 1 zum pilotierten Fahren eines Kraftfahrzeugs umfasst ein übergeordnetes Steuergerät 2 und ein Lenkungssteuergerät 3, die über ein Bussystem 4 miteinander verbunden sind. Über das Bussystem 4 ist dann das übergeordnete Steuergerät 2 gegebenenfalls noch mit einem Bremsensteuergerät, einem Motorsteuergerät und/oder weiteren Steuergeräten verbunden.

In dem Lenkungssteuergerät 3 ist ein erster Regler 5, ein zweiter Regler 6, eine Überwachungseinheit 7 und eine Diagnoseeinheit 8 integriert. Ausgangsseitig ist das Lenkungssteuergerät 3 mit einer ersten Leistungselektronik 9 und einer zweiten Leistungselektronik 10 verbunden. Die erste Leistungselektronik 9 erzeugt einen Steuerstrom für einen ersten Elektromotor 11 und die zweite Leistungselektronik 10 erzeugt einen Steuerstrom für den zweiten Elektromotor 12. Über Getriebe 13, 14 sind der erste Elektromotor 11 und der zweite Elektromotor 12 mit einer Zahnstange 15 verbunden. Weiter weisen sowohl der erste Elektromotor 11 als auch der zweite Elektromotor 12 jeweils einen Rotorlagesensor 16, 17 auf.

Das übergeordnete Steuergerät 2 ermittelt einen gewünschten Lenkeingriff, um eine Trajektorie abzufahren. Das übergeordnete Steuergerät 2 übermittelt dann an das Lenkungssteuergerät 3 eine Soll-Aktorausgangsgröße (z.B. eine Soll-Position der Zahnstange 13), eine Soll-Zeit und ein Toleranz-Band. Die übermittelten Daten werden der Überwachungseinheit 7 übermittelt. Der erste Regler 5 erhält die Soll-Aktorausgangsgröße und ermittelt einen Steuerstrom, mit dem die Leistungselektronik 9 sowie 10 jeweils die Elektromotoren 11, 12 ansteuern müssen, damit sich die gewünschte Soll-Aktorausgangsgröße einstellt. Der erste Regler 5 ist dabei als komplexer Regler ausgebildet (z.B. als PID-Regler). Mittels der Rotorlagesensoren 16, 17 wird die Ist-Aktorausgangsgröße ermittelt und an die Überwachungseinheit 7 übermittelt. Die Überwachungseinheit 7 vergleicht nun, ob nun in der Soll-Zeit sich eine Ist-Aktorausgangsgröße innerhalb des Toleranz-Bandes eingestellt. Ist dies nicht der Fall, so spricht dies für einen Software-Fehler des ersten Reglers 5. Software-Fehler deshalb, weil über die Diagnoseeinheit 8 die Hardware kontinuierlich überwacht wird. Die Überwachungseinheit 7 deaktiviert daraufhin den ersten Regler 5 und aktiviert den zweiten Regler 6, der einfacher ist. Der zweite Regler 6 ermittelt dann die gewünschten Steuersignale für die Leistungselektroniken 9, 10. Dabei kann vorgesehen sein, dass mittels des zweiten Reglers 6 nur ein Notbetrieb durchgeführt wird, um das Kraftfahrzeug sicher zum Stillstand zu bringen. Der zweite Regler 6 ist dabei ein einfacher Regler und ist beispielsweise als einfacher P-Regler ausgebildet.

## Patentansprüche

1. Vorrichtung (1) zum pilotierten Fahren eines Kraftfahrzeugs, umfassend mindestens ein übergeordnetes Steuergerät (2), einen ersten Regler (5), einen zweiten Regler (6), mindestens einen Aktor, eine Einheit zur Erfassung mindestens einer Ist-Aktorausgangsgröße des Aktors sowie eine Überwachungseinheit (7), wobei das übergeordnete Steuergerät (2) derart ausgebildet ist, eine Soll-Aktorausgangsgröße zu ermitteln und an den ersten Regler (5) sowie die Überwachungseinheit (7) zu übermitteln, wobei der erste Regler (5) derart ausgebildet ist, aufgrund der Soll-Aktorausgangsgröße sowie mindestens einer weiteren Größe ein Steuersignal für den Aktor zu ermitteln, wobei die Überwachungseinheit (7) und/oder das übergeordnete Steuergerät (2) derart ausgebildet sind, dass bei einer vorgegebenen Abweichung der Ist-Aktorausgangsgröße von der Soll-Aktorausgangsgröße der erste Regler (5) deaktiviert und der zweite Regler (6) aktiviert wird,
**dadurch gekennzeichnet, dass**
der zweite Regler mindestens eine Eingangsgröße weniger als der erste Regler aufweist.

2. Vorrichtung nach Anspruch 1, **dadurch gekennzeichnet, dass** das übergeordnete Steuergerät (2) derart ausgebildet ist, neben der Soll-Aktorausgangsgröße eine Soll-Zeit und ein Toleranz-Band für die Soll-Aktorausgangsgröße an die Überwachungseinheit (7) zu übermitteln.

3. Vorrichtung nach Anspruch 1 oder 2, **dadurch gekennzeichnet, dass** bei zeitkritischen Abweichungen die Deaktivierung des ersten Reglers (5) und die Aktivierung des zweiten Reglers (6) durch die Überwachungseinheit (7) erfolgt.

4. Vorrichtung nach einem der vorangegangenen Ansprüche, **dadurch gekennzeichnet, dass** die Vorrichtung (1) einem weiteren Aktor aufweist, wobei der weitere Aktor vom ersten und/oder vom zweiten Regler angesteuert wird.

5. Vorrichtung nach einem der vorangegangenen Ansprüche, **dadurch gekennzeichnet, dass** der mindestens eine Aktor als Elektromotor (11, 12) zur Einstellung eines Lenkwinkels des Kraftfahrzeugs ausgebildet ist.

6. Vorrichtung nach Anspruch 5, **dadurch gekennzeichnet, dass** dem Elektromotor (11, 12) ein Lenkungssteuergerät (3) zugeordnet ist, wobei die Überwachungseinheit (7) und/oder der erste Regler (5) in dem Lenkungssteuergerät (3) integriert sind.

7. Vorrichtung nach Anspruch 6, **dadurch gekennzeichnet, dass** zusätzlich der zweite Regler (6) in das Lenkungssteuergerät (3) integriert ist.

8. Vorrichtung nach einem der Ansprüche 5 bis 7, **dadurch gekennzeichnet, dass** die Einheit zur Erfassung der Ist-Aktorausgangsgröße als Rotorlagesensor (16, 17) ausgebildet ist.

9. Vorrichtung nach einem der vorangegangenen Ansprüche, **dadurch gekennzeichnet, dass** dem ersten Regler (5) eine Diagnoseeinheit (8) zur Erfassung von Bauteilefehlern zugeordnet ist.

10. Verfahren zum pilotierten Fahren eines Kraftfahrzeugs mittels mindestens einem übergeordneten Steuergerät (2), einem ersten Regler (5), einem zweiten Regler (6), mindestens einem Aktor, einer Einheit zur Erfassung mindestens einer Ist-Aktorausgangsgröße des Aktors sowie einer Überwachungseinheit (7), wobei das übergeordnete Steuergerät (2) eine Soll-Aktorausgangsgröße ermittelt und an den ersten Regler (5) und die Überwachungseinheit (7) übermittelt, wobei der erste Regler (5) aufgrund der Soll-Aktorausgangsgröße sowie mindestens einer weiteren Größe ein Steuersignal für den Aktor ermittelt und an diesen übermittelt, wobei die Überwachungseinheit (7) und/oder das übergeordnete Steuergerät (2) bei einer vorgegebenen Abweichung der Ist-Aktorausgangsgröße von der Soll-Aktorausgangsgröße den ersten Regler (5) deaktiviert und den zweiten Regler (6) aktiviert,
**dadurch gekennzeichnet, dass**
der zweite Regler (6) mindestens eine Eingangsgröße weniger als der erste Regler aufweist.

## Claims

1. The invention relates to a device (1) for autopiloting a motor vehicle, comprising at least one higher-level control device (2), a first controller (5), a second controller (6), at least one actuator, a unit for detecting at least one actual actuator output variable of the actuator, and also a monitoring unit (7), wherein the higher-level control device (2) is designed so as to determine a target actuator output variable and transmit it to the first controller (5) and to the monitoring unit (7), wherein the first controller (5) is designed so as to determine, based on the target actuator output variable and on at least one further variable, a control signal for the actuator, wherein the monitoring unit (7) and/or the higher-level control device (2) are designed such that the first controller (5) is deactivated and the second controller (6) is activated in the event of a predefined deviation of the actual actuator output variable from the target actuator output variable,
**characterized in that**
the second controller has at least one input variable fewer than the first controller.

2. Device according to Claim 1, **characterized in that** the higher-level control unit (2) is designed so as to transmit a target time and a tolerance band for the target actuator output variable to the monitoring unit (7) in addition to the target actuator output variable.

3. Device according to Claims 1 or 2, **characterized in that** in the event of time-critical deviations, the deactivation of the first controller (5) and the activation of the second controller (6) are effected by the monitoring unit (7).

4. Device according to any one of the preceding claims, **characterized in that** the device (1) comprises a further actuator, wherein the further actuator is controlled by the first and/or the second controller.

5. Device according to any one of the preceding claims, **characterized in that** the at least one actuator is designed as an electric motor (11, 12) for adjusting a steering angle of the motor vehicle.

6. Device according to Claim 5, **characterized in that** the electric motor (11, 12) is assigned a steering control unit (3), wherein the monitoring unit (7) and/or the first controller (5) are integrated in the steering control unit (3).

7. Device according to Claim 6, **characterized in that,** in addition, the second controller (6) is integrated into the steering control unit (3).

8. Device according to any one of Claims 5 to 7, **characterized in that** the unit for detecting the actual actuator output variable is designed as a rotor position sensor (16, 17).

9. Device according to any one of the preceding claims, **characterized in that** a diagnostic unit (8) for detecting component faults is assigned to the first controller (5).

10. Method for autopiloting a motor vehicle by means of at least one higher-level control device (2), a first controller (5), a second controller (6), at least one actuator, a unit for detecting at least one actual actuator output variable of the actuator, and a monitoring unit (7), wherein the higher-level control unit (2) determines a target actuator output variable and transmits it to the first controller (5) and the monitoring unit (7), wherein the first controller (5), on the basis of the target actuator output variable and at least one further variable, determines a control signal for the actuator and transmits it to the same, wherein the monitoring unit (7) and/or the higher-level control device (2) deactivates the first controller and activates the second controller (6) in the event of a predefined deviation of the actual actuator output variable from the target actuator output variable,
**characterized in that**
the second controller (6) has at least one input variable fewer than the first controller.

## Revendications

1. Dispositif (1) servant à la conduite autonome d'un véhicule automobile, comprenant au moins un appareil de commande (2) supérieur, un premier régulateur (5), un second régulateur (6), au moins un actionneur, une unité pour la détection d'au moins une grandeur de sortie réelle de l'actionneur ainsi qu'une unité de surveillance (7), l'appareil de commande (2) supérieur étant conçu pour déterminer une grandeur de sortie de consigne de l'actionneur et la transmettre au premier régulateur (5) ainsi qu'à l'unité de surveillance (7), le premier régulateur (5) étant conçu pour déterminer un signal de commande pour l'actionneur, en fonction de la grandeur de sortie de consigne de l'actionneur et d'au moins une grandeur supplémentaire, l'unité de surveillance (7) et/ou l'appareil de commande (2) supérieur étant conçus de telle sorte, qu'en cas de différence prédéfinie entre la grandeur de sortie réelle de l'actionneur et la grandeur de sortie de consigne de l'actionneur, le premier régulateur (5) soit désactivé et le second régulateur (6) soit activé,
**caractérisé en ce que**
le second régulateur présente au moins une grandeur d'entrée de moins que le premier régulateur.

2. Dispositif selon la revendication 1, **caractérisé en ce que** l'appareil de commande (2) supérieur est conçu pour transmettre, en plus de la grandeur de sortie théorique de l'actionneur, une durée théorique et une plage de tolérance pour la grandeur de sortie théorique de l'actionneur à l'unité de surveillance (7).

3. Dispositif selon la revendication 1 ou 2, **caractérisé en ce que,** en cas de différence critique du point de vue du temps, la désactivation du premier régulateur (5) et l'activation du second régulateur (6) sont effectuées par l'unité de surveillance (7).

4. Dispositif selon l'une quelconque des revendications précédentes, **caractérisé en ce que** le dispositif (1) présente un actionneur supplémentaire, l'actionneur supplémentaire étant commandé par le premier et/ou le second régulateur.

5. Dispositif selon l'une quelconque des revendications précédentes, **caractérisé en ce que** l'au moins un actionneur est conçu comme un moteur électrique (11, 12) pour le réglage d'un angle de braquage du véhicule automobile.

6. Dispositif selon la revendication 5, **caractérisé en ce qu'un** appareil de commande de direction (3) est associé au moteur électrique (11, 12), l'unité de surveillance (7) et/ou le premier régulateur (5) étant intégrés dans l'appareil de commande de direction (3).

7. Dispositif selon la revendication 6, **caractérisé en ce que,** en outre, le second régulateur (6) est intégré dans l'appareil de commande de direction (3).

8. Dispositif selon l'une quelconque des revendications 5 à 7, **caractérisé en ce que** l'unité de détection de la grandeur de sortie réelle de l'actionneur est conçue comme un capteur de position de rotor (16, 17).

9. Dispositif selon l'une quelconque des revendications précédentes, **caractérisé en ce qu'une** unité de diagnostic (8) pour la détection de pannes de composants est associée au premier régulateur (5).

10. Procédé pour la conduite autonome d'un véhicule automobile au moyen d'au moins un appareil de commande (2) supérieur, d'un premier régulateur (5), d'un second régulateur (6), d'au moins un actionneur, d'une unité pour la détection d'au moins une grandeur de sortie réelle de l'actionneur ainsi que d'une unité de surveillance (7), l'appareil de commande (2) supérieur déterminant une grandeur de sortie de consigne de l'actionneur et la transmettant au premier régulateur (5) ainsi qu'à l'unité de surveillance (7), le premier régulateur (5) déterminant, en fonction de la grandeur de sortie de consigne de l'actionneur et d'au moins une grandeur supplémentaire, un signal de commande pour l'actionneur et le lui transmettant, l'unité de surveillance (7) et/ou l'appareil de commande (2) supérieur, en cas de différence prédéfinie entre la grandeur de sortie réelle de l'actionneur et la grandeur de sortie de consigne de l'actionneur, désactivant le premier régulateur (5) et activant le second régulateur (6),
**caractérisé en ce que**
le second régulateur (6) présente au moins une grandeur d'entrée de moins que le premier régulateur.
